(19) **Europäisches Patentamt / European Patent Office / Office européen des brevets**

(11) **EP 2 698 607 B1**

(12) **EUROPÄISCHE PATENTSCHRIFT**

(45) Veröffentlichungstag und Bekanntmachung des Hinweises auf die Patenterteilung:
**01.10.2014 Patentblatt 2014/40**

(51) Int Cl.:
*G01C 21/30* (2006.01)    *G01C 22/00* (2006.01)

(21) Anmeldenummer: **12180295.3**

(22) Anmeldetag: **13.08.2012**

(54) **Verfahren zum Ermitteln der Länge eines von einem Fahrzeug zurückgelegten Wegs**

Method for calculating the distance travelled by a vehicle

Procédé de détermination de la longueur d'une trajectoire effectuée par un véhicule

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.02.2014 Patentblatt 2014/08**

(73) Patentinhaber: **Kapsch TrafficCom AG**
**1120 Wien (AT)**

(72) Erfinder:
• **Tijink, Jasja**
**2384 Breitenfurt (AT)**

• **Scheider, Thomas**
**2201 Gerasdorf (AT)**
• **Weimann, Franz**
**5600 St. Johann im Pongau (AT)**
• **Schrödl, Sören**
**2340 Mödling (AT)**

(74) Vertreter: **Weiser, Andreas**
**Patentanwalt**
**Kopfgasse 7**
**1130 Wien (AT)**

(56) Entgegenhaltungen:
**EP-A1- 1 736 932    EP-A1- 2 431 712**
**US-A1- 2010 106 405**

**Beschreibung**

Die vorliegende Erfindung betrifft ein Verfahren zum Ermitteln der Länge eines von einem Fahrzeug zurückgelegten Wegs unter Verwendung einer vom Fahrzeug mitgeführten Onboard-Unit, welche eine Folge von Messwerten ihrer eigenen Position erzeugt.

Onboard-Units (OBUs) werden insbesondere in Straßenmautsystemen eingesetzt, um von einem die OBU mitführenden Fahrzeug befahrene Wege ermitteln und anschließend vermauten zu können. Dazu lokalisiert sich eine OBU beispielsweise in einem Satellitennavigationssystem (global navigation satellite system, GNSS) oder in einem terrestrischen Mobilfunknetz mit mehreren ortsfesten Sendeempfängern selbst und erzeugt so eine Folge von Positionsmesswerten ("position fixes"). Jeder der erzeugten Positionsmesswerte unterliegt Messungenauigkeiten, weshalb die erzeugte Folge einer Nachbearbeitung bedarf.

Zur Nachbearbeitung ist es bekannt, die erzeugten Positionsmesswerte mit einer das Straßennetz modellierenden digitalen Straßenkarte zu vergleichen ("map-matching"). Dabei werden die jeweils nächstliegenden Straßensegmente als befahren ermittelt. Je nach Bauart sendet die OBU dazu entweder die Positionsmesswerte an eine Zentrale des Straßenmautsystems, wo das map-matching erfolgt ("thin-client-OBU"), oder die digitale Straßenkarte ist in der OBU selbst abgelegt, wo auch das map-matching durchgeführt wird ("thick-client-OBU").

Map-matching-Verfahren haben jedoch den Nachteil, dass die Genauigkeit der Weglängenermittlung durch die Segmentauflösung der digitalen Straßenkarte beschränkt ist. Die Längen der von einem Fahrzeug tatsächlich zurückgelegten Wege weichen häufig von den Längen der digital modellierten Straßensegmente ab: So ist beispielsweise im Bereich von Kurven, Kreuzungen oder Kreisverkehren der tatsächlich befahrene Weg abhängig von der Fahrtrichtung des Fahrzeugs, während die Segmentlängen der digitalen Straßenkarte in der Regel davon unabhängig modelliert sind.

Anderseits wäre es auch problematisch, die Weglängen auf der Grundlage der Positionsmesswerte zu ermitteln, da die häufigen Ungenauigkeiten der Positionsmesswerte einer verlässlichen, robusten Weglängenermittlung entgegenstehen.

Aus der EP1736932 und der US2010/0106405 sind Verfahren zur Ermittlung der Länge eines von einem Fahrzeug zurückgelegten Weges bekannt, wobei Positionsmesswerte, deren Positionsqualitätsmaß einen vorgegebenen Schwellwert unterschreiten, unberücksichtigt bleiben.

Die Erfindung setzt sich zum Ziel, ein Verfahren zum Ermitteln der Länge eines von einem Fahrzeug zurückgelegten Wegs zu schaffen, welches eine höhere Genauigkeit als bisher bekannte Systeme bei gleichzeitiger Robustheit gegenüber Positionsmessungenauigkeiten aufweist.

· Dieses Ziel wird mit einem Verfahren der genannten Art unter Verwendung einer Onboard-Unit erreicht, welche eine Folge von Messwerten ihrer eigenen Position und für jeden Positionsmesswert der Folge ein zugehöriges Positionsqualitätsmaß erzeugt, umfassend:

Entnehmen eines Satzes aufeinanderfolgender Positionsmesswerte aus der Folge unter Nichtberücksichtigung jener Positionsmesswerte, deren Positionsqualitätsmaß einen vorgegebenen ersten Schwellwert unterschreitet,
Ermitteln eines Satzqualitätsmaßes anhand der Anzahl der Positionsmesswerte des Satzes oder anhand ihrer Positionsqualitätsmaße, und
wenn das Satzqualitätsmaß einen vorgegebenen zweiten Schwellwert überschreitet: Ermitteln der Weglänge aus den gegenseitigen Abständen aufeinanderfolgender Positionsmesswerte des Satzes, andernfalls: Ermitteln der Weglänge unter Verwendung einer digitalen Straßenkarte, die sich aus Straßensegmenten jeweils bekannter Segmentlänge zusammensetzt, durch Zuordnen der Positionsmesswerte des Satzes zu zumindest einem Straßensegment und Ermitteln der Weglänge aus der Segmentlänge dieses zumindest einen Straßensegments.

Das Verfahren der Erfindung beruht auf einem zweistufigen Qualitätsvergleich. In einer ersten Stufe werden Positionsmess-werte hoher Positionsqualität in einen Satz übernommen und dabei "schlechte" Positionsmesswerte ausgeschieden; daraufhin wird in einer zweiten Stufe die Qualität des gesamten Satzes beurteilt: Ist diese hoch, so erfolgt die Ermittlung der Weglänge unmittelbar auf Grundlage der realen, "guten" Positionsmesswerte des Satzes und ist damit größtmöglich präzise. Wenn die Satzqualität nicht ausreicht, wird für diesen Satz ein Straßensegment durch map-matching ermittelt und zur Bestimmung der Weglänge herangezogen. Wird das Verfahren wiederholt für aufeinanderfolgende Sätze von Positionsmesswerten durchgeführt, so ergibt sich für eine über mehrere Sätze bzw. Segmente aufsummierte Gesamtlänge des zurückgelegten Wegs eine besonders hohe Genauigkeit durch die direkte Verwendung der "guten" Positionsmesswerte bei gleichzeitiger erhöhter Robustheit des Verfahrens gegenüber "schlechten" Positionsmesswerten in einzelnen Straßensegmenten durch das dort angewendete map-matching-Verfahren.

In einer vorteilhaften Ausführungsform der Erfindung wird das Satzqualitätsmaß aus den Positionsqualitätsmaßen des Satzes als Durchschnitt derselben ermittelt. So findet das Positionsqualitätsmaß jedes der im Satz berücksichtigten Positionsmesswerte Eingang in das Satzqualitätsmaß. Die Entscheidung, ob die Positionsmesswerte für die Weglängenermittlung herangezogen werden sollen oder das robustere map-matching-Verfahren angewendet werden soll, wird somit genau anhand der relevanten Positionsqualitätsmaße der berücksichtigten Positionsmesswerte getroffen.

Alternativ dazu kann das Satzqualitätsmaß als Verhältnis der Anzahlen von im Satz berücksichtigten Positionsmesswerten zur Summe aus berücksichtigten plus nicht-berücksichtigten Positionsmesswerten ermittelt werden. Dadurch werden indirekt auch Messungenauigkeiten der nicht-berücksichtigten Positionsmesswerte mitbetrachtet und bilden so eine breitere Entscheidungsgrundlage. Außerdem wird das Satzqualitätsmaß durch einen solchen einfachen Vergleich der Anzahlen ressourcenschonend und rasch ermittelt.

Falls gewünscht, können die Positionsmesswerte mittels eines Mobilfunkempfängers der Onboard-Unit durch Ortung in einem terrestrischen Mobilfunknetz erzeugt werden. Besonders vorteilhaft ist es, wenn die Positionsmesswerte mittels eines Satellitennavigationsempfängers der Onboard-Unit durch Ortung in einem Satellitennavigationssystem (global navigation satellite system, GNSS) erzeugt werden.

Die Bestimmung des Positionsqualitätsmaßes ist in verschiedenen Varianten möglich, die auch miteinander kombiniert oder nacheinander angewendet werden können. Eine erste Ausführungsform, die speziell für GNSS-basierte OBUs geeignet ist, besteht darin, dass der Satellitennavigationsempfänger zu jedem Positionsmesswert einen zugehörigen DOP-Wert ("dilution of precision"), bevorzugt HDOP-Wert ("horizontal dilution of precision"), als Grundlage für dessen Positionsqualitätsmaß ausgibt. DOP- und HDOP-Werte werden von vielen handelsüblichen Satellitennavigationsempfängern nativ zu jedem Positionsmesswert bereitgestellt und geben die geometrischen Verhältnisse der aktuellen Satellitenkonstellation an, die hier als Basis eines möglichen Streubereichs des jeweiligen Positionsmesswerts dienen.

In einer alternativen oder ergänzenden Ausführungsform wird das Positionsqualitätsmaß eines Positionsmesswerts in Abhängigkeit von dessen Abstand zu einem nächstliegenden Straßensegment der digitalen Straßenkarte erzeugt. Eine solche Vorgehensweise entspricht einem vereinfachten map-matching-Verfahren, in dem keine komplexe Plausibilitätsprüfung anhand benachbarter Positionsmesswerte durchgeführt wird, sondern lediglich der Abstand zum nächstliegenden Straßensegment bestimmt wird. Somit findet die Robustheit des map-matching-Verfahrens bereits bei der Erzeugung des Positionsqualitätsmaßes Eingang in das erfindungsgemäße Verfahren, sodass z.B. einzelne weit abliegende Positionsmesswerte ("Ausreißer" bzw. "outlier") nicht berücksichtigt werden. In thick-client-OBUs, wo die digitale Straßenkarte in der OBU vorliegt, kann diese Ausführungsform direkt umgesetzt werden und ist deshalb besonders vorteilhaft. Jedoch können dazu auch thin-client-OBUs eingesetzt werden, die diesen Schritt an ein externes map-matching-System auslagern.

In einer weiteren alternativen oder zusätzlichen Ausführungsform wird das Positionsqualitätsmaß eines Positionsmesswerts in Abhängigkeit von dessen Abstand zu einem Erwartungswert erzeugt, welcher für den genannten Positionsmesswert durch Interpolation aus benachbarten Positionsmesswerten der Folge gebildet wird. Einzelne "Ausreißer" können so auch ohne map-matching aus dem Verfahren ausgeschieden werden. Dabei können auch mehr als zwei benachbarte Positionsmesswerte zur Interpolation herangezogen werden, insbesondere für Interpolationen höherer (nicht-linearer) Ordnung, was die Treffsicherheit erhöht.

Alternativ kann das Positionsqualitätsmaß eines Positionsmesswerts in Abhängigkeit von dessen Abstand zu einem Erwartungswert erzeugt werden, welcher für den genannten Positionsmesswert durch Extrapolation aus vorhergehenden Positionsmesswerten der Folge gebildet wird. Nachfolgende Positionsmesswerte müssen dazu, anders als bei der Interpolation, noch nicht bekannt sein, sodass sich diese Variante besonders für eine Echtzeit-Implementierung eignet. Auch hier kann mehr als ein vorhergehender Positionsmesswert zur Extrapolation herangezogen werden, insbesondere für Extrapolationen höherer (nicht-linearer) Ordnung oder z.B. bei Verwendung eines Kalman-Filters zur Extrapolation, was wieder die Treffsicherheit erhöht.

Viele Satellitennavigationsempfänger können heute mit hoher Genauigkeit bereits nativ auch ihre Geschwindigkeit und Bewegungsrichtung sowie ihre Beschleunigung bestimmen. In solchen Fällen ist es besonders günstig, wenn der Satellitennavigationsempfänger zu jedem Positionsmesswert einen zugehörigen Bewegungsvektor ausgibt, welcher zur Extrapolation des Erwartungswerts herangezogen wird. Ein solcher aus Geschwindigkeit und Bewegungsrichtung - gegebenenfalls unter Zuhilfenahme des Werts für die Beschleunigung - gebildeter Bewegungsvektor lässt den Erwartungswert für den folgenden Positionsmesswert besonders präzise abschätzen und liefert einen guten Anhaltspunkt für das Erzeugen des Positionsqualitätmaßes.

Alternativ dazu kann die Onboard-Unit zu jedem Positionsmesswert einen Bewegungsmesswert von einem Fahrzeugsensor empfangen, welcher zur Extrapolation des Erwartungswerts herangezogen wird. Der Bewegungsmesswert kann dabei von einem Geschwindigkeits- oder Trägheitssensor, gegebenenfalls auch von einem Tachograph des Fahrzeugs gesendet werden und auch eine Kombination der Messwerte solcher Sensoren sein. Dies führt ebenso zu einer präzisen Abschätzung des Erwartungswerts, und zwar ohne von einem GNSS abhängig zu sein.

Aufeinanderfolgende Sätze von Positionsmesswerten könnten einander überlappen. Um ein rascheres Ermitteln der Weglänge zu begünstigen, werden aufeinanderfolgende Sätze von Positionsmesswerten bevorzugt überlappungsfrei aus der Folge von Positionsmesswerten entnommen, da so die Weglänge mit der geringsten Anzahl von Sätzen rasch und lückenlos ermittelbar ist.

In einer vorteilhaften Variante der Erfindung werden die gegenseitigen Abstände aus den Positionsmesswerten selbst ermittelt. In einer alternativen Variante dazu erzeugt die Onboard-Unit für jeden Positionsmesswert ein zugehöriges Paar von Geschwindigkeit und Messzeitpunkt, und die gegenseitigen Abstände jeweils zweier aufeinanderfolgender Positionsmesswerte werden aus der Geschwindigkeit am ersten der beiden Positionsmesswerte und der Differenz der Messzeitpunkte der beiden Positionsmesswerte ermittelt. Da gerade in Satellitennavigationsempfängern besonders präzise Werte für Geschwindigkeit und Zeit erzeugt werden, ermöglicht letztere Variante eine besonders genaue Ermittlung der Abstände aufeinanderfolgender Positionsmesswerte.

Die Erfindung wird nachfolgend anhand von in den beigeschlossenen Zeichnungen dargestellten Ausführungsbeispielen näher erläutert. In den Zeichnung zeigen:

Fig. 1 einen Ausschnitt eines durch eine digitale Straßenkarte modellierten Straßennetzes schematisch in der Draufsicht;
Fig. 2 eine zur Verwendung im erfindungsgemäßen Verfahren geeignete Onboard-Unit in einem schematischen Blockschaltbild;
Fig. 3 eine der Abbiegungen des Straßennetzes von Fig. 1 vergrößert im Detail;
Fig. 4 ein Flussdiagramm des Verfahrens der Erfindung zur Ermittlung eines von einem Fahrzeug in dem Straßennetz von Fig. 1 zurückgelegten Wegs; die Fig. 5 und 6 verschiedene Varianten der Erzeugung eines Positionsqualitätsmaßes für einen Positionsmesswert einmal in funktioneller Blockschaltbildform (Fig. 5) und einmal anhand beispielhafter Positionsmesswerte im Straßennetz (Fig. 6);
Fig. 7 den Schritt des Entnehmens von Sätzen von Positionsmesswerten entsprechend den Varianten von Fig. 5 und 6 im Detail; und
Fig. 8 die satzqualitätsabhängige Weglängenermittlung anhand des Beispiels der Fig. 5 bis 7 im Detail.

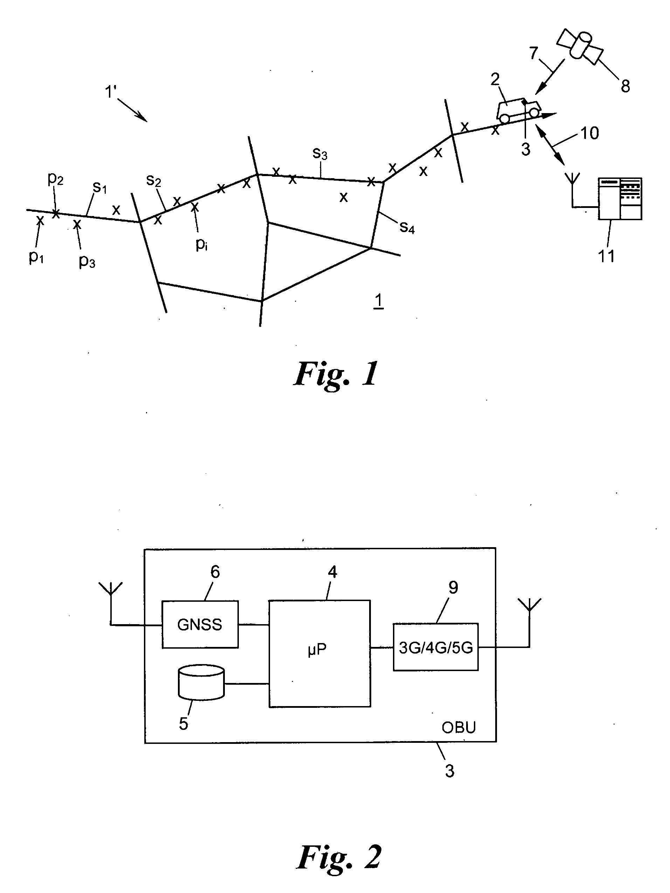

Fig. 1 zeigt ein Straßennetz 1, das in Form einer digitalen Straßenkarte 1' aus einem Netzgraphen von Straßensegmenten $s_1$, $s_2$, ..., allgemein $s_k$, modelliert ist. Ein beispielhaftes Fahrzeug 2 führt eine Onboard-Unit (OBU) 3 mit, welche befähigt ist, sich selbst im Straßennetz 1 zu lokalisieren. Die OBU 3 verfügt zu diesem Zweck neben einem Mikroprozessor 4 und einem Speicher 5 über einen Satellitennavigationsempfänger 6 (Fig. 2), mit welchem sie Navigationssignale 7 eines globalen Satellitennavigationssystems 8 (global navigation satellite system, GNSS) wie GPS, GLONASS, GALILEO od. dgl. empfängt und daraus fortlaufend Messwerte ihrer eigenen Position ("position fixes") $p_1$, $p_2$, ..., allgemein $p_i$, erzeugt. Alternativ könnte die OBU 3 ihre Positionsmesswerte $p_i$ auch auf andere Art ermitteln, z.B. durch Funktriangulation, Zellkennungsauswertung od. dgl. in einem terrestrischen Mobilfunknetz (public land mobile network, PLMN) wie einem GSM-, UMTS- oder anderem 3G/4G/5G-Netz.

Gemäß Fig. 2 ist die OBU 3 weiters mit einem Sendeempfänger 9 ausgestattet, mittels welchem sie die Positionsmesswerte $p_i$ über ein Mobilfunknetz 10 der geschilderten Art an eine Mautzentrale 11 senden kann. In der Mautzentrale 11 können z.B. aus den so erhaltenen Positionsdaten $p_i$ durch Kartenabgleich ("map-matching") mit der digitalen Straßenkarte 1' die Straßensegmente $s_k$ bestimmt werden, welche das Fahrzeug 2 befahren hat. Das map-matching könnte auch in einem der Mautzentrale 11 vorgeordneten, gesonderten Kartenabgleichsserver ("map-matching-proxy") durchgeführt werden oder auch gleich in der OBU 3, wenn die digitale Straßenkarte in ihrem Speicher 5 abgelegt ist. Aus den in der digitalen Straßenkarte 1' hinterlegten, bekannten Segmentlängen $l_k$ der ermittelten Straßensegmente $s_k$ kann dann die Länge 1 des vom Fahrzeug 2 im Straßennetz 1 zurückgelegten Wegs berechnet werden.

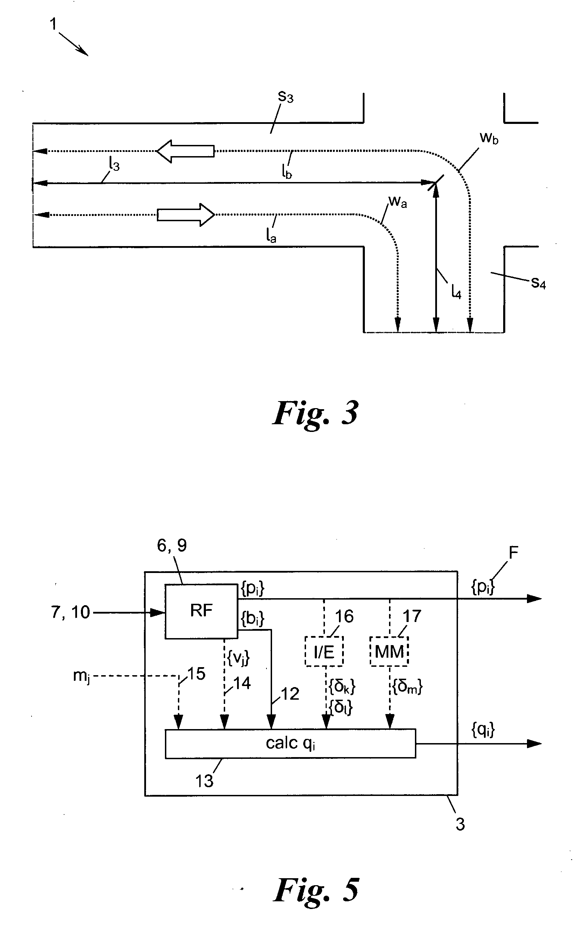

Fig. 3 veranschaulicht eines der Probleme einer derartigen Weglängenermittlung durch map-matching. Aufgrund der begrenzten Auflösung von digitalen Straßenkarten, welche auch mehrspurige Straßenabschnitte häufig nur durch ein einziges Straßensegment $s_k$ modellieren, weichen die Weglängen $l_a$, $l_b$ der auf unterschiedlichen Fahrspuren zurückgelegten Wege $w_a$, $w_b$ von den hiefür in der Straßenkarte 1' hinterlegten Segmentlängen $l_3$, $l_4$ ab. Das im Folgenden geschilderte Verfahren überwindet dieses Problem.

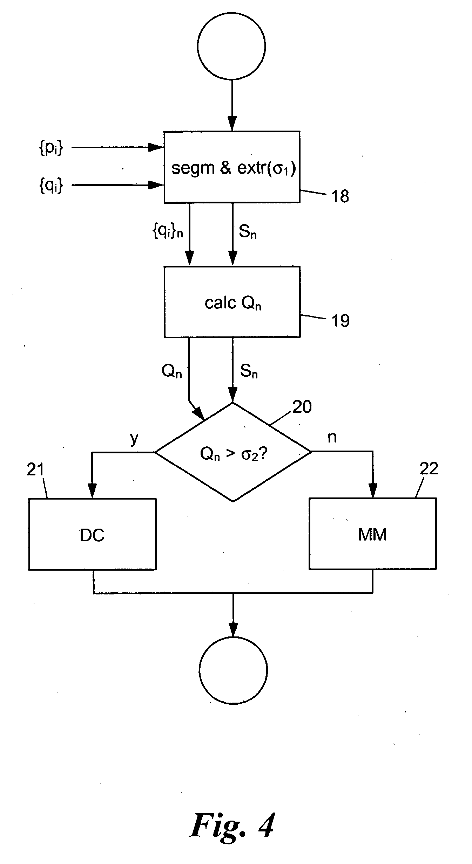

Fig. 4 zeigt das Verfahren im Überblick und die Fig. 5 bis 8 zeigen das Verfahren im Detail. Das Verfahren der Fig. 4 bis 8 kann sowohl zur Gänze in einer OBU 3 als auch teilweise in einer OBU 3 und teilweise in der Mautzentrale 11 und/oder einem dieser vorgelagerten map-matching-proxy ablaufen.

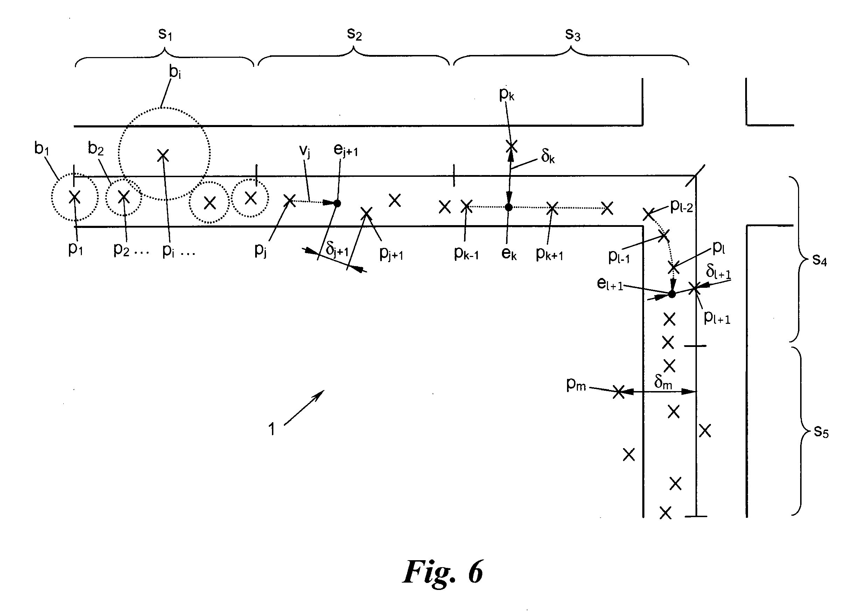

Das Verfahren von Fig. 4 geht von einer speziellen Ausbildung der OBUs 3 aus, wonach diese zu jedem Positionsmesswert $p_i$ jeweils ein zugehöriges Qualitätsmaß $q_i$ des Positionsmesswerts $p_i$ erzeugen, d.h. zwei einander zugeordnete Folgen $\{p_i\}$ (im Weiteren auch F genannt) und $\{q_i\}$ von Positionsmesswerten $p_i$ und Positionsqualitätsmaßen $q_i$ bzw. eine Folge $\{(p_i, q_i)\}$ von Paaren von Positionsmesswerten $p_i$ und Positionsqualitätsmaßen $q_i$. Die Fig. 5 und 6 zeigen verschiedenste Varianten der Erzeugung eines Positionsqualitätsmaßes $q_i$ für einen Positionsmesswert $p_i$, wobei in jedem der beispielhaften Straßensegmente $s_1$ - $s_5$ von Fig. 6 jeweils eine andere Variante dargestellt ist.

Wie im Straßensegment $s_1$ von Fig. 6 gezeigt, besteht eine erste Möglichkeit darin, dass die OBU 3 einen Satellitennavigationsempfänger 6 verwendet, welcher bereits selbst ("intrinsisch") zu jedem Positionsmesswert $p_i$ auch einen Messfehler- bzw. Streubereichswert $b_i$ bereitstellt, der im einfachsten Fall direkt als Grundlage für das Positionsqualitätsmaß $q_i$ dienen kann, z.B. in der Form $q_i \stackrel{\wedge}{=} 1/b_i$. Derartige Streubereichswerte $b_i$ können beispielsweise die Werte sog. DOP ("dilution of precision"), PDOP ("positional DOP"), TDOP ("time DOP"), GDOP ("geometric DOP") oder bevorzugt HDOP ("horizontal DOP") sein, wie sie von handelsüblichen GNSS-Empfängern, z.B. GPS-Empfängern, auf Basis der aktuellen Satellitenkonstellation und der damit verbundenen Messfehler erzeugt werden.

Wenn die OBU 3 anstelle (oder zusätzlich) zu dem Satellitennavigationsempfänger 6 einen Mobilfunknetz-Sendeempfänger 9 zur Positionsbestimmung einsetzt, könnte der Streubereichswert $b_i$ beispielsweise auch von diesem intrinsisch erzeugt werden, z.B. anhand der aktuell empfangbaren Basisstationen des Mobilfunknetzes 10 oder der aktuellen Lokalisierungsgenauigkeit entsprechender Mobilfunknetzdienste ("location based services").

Pfad 12 in Fig. 5 zeigt schematisch eine solche direkte Heranziehung der Streubereichswerte $b_i$ der Empfänger 6, 9 für die Erzeugung der Positionsqualitätsmaße $q_i$ in einem Block 13.

Im Straßensegment $s_2$ von Fig. 6 ist eine zweite Variante der Erzeugung der Positionsqualitätsmaße $q_i$ veranschaulicht. In dieser Variante liefert der Satellitennavigationsempfänger 6 zu jedem Positionsmesswert $p_j$ jeweils auch einen aktuellen Bewegungsvektor $v_j$ (siehe Pfad 14 in Fig. 5), umfassend Richtung und Geschwindigkeit $g_j$ der OBU 3 und eventuell auch ihre Beschleunigung, welche Werte von handelsüblichen Satellitennavigationsempfängern 6 z.B. mittels Doppler-Messungen an dem empfangenen Satellitennavigationssignal 7 mit besonders hoher Genauigkeit ermittelt werden können. Auch handelsübliche Mobilfunkempfänger 9 könnten einen derartigen Bewegungsvektor $v_j$ z.B. anhand von Doppler-Messungen an den von umliegenden Basisstationen empfangenen Signalen ermitteln. In beiden Varianten könnte der Bewegungsvektor $v_j$ auch zusätzlich oder ausschließlich durch ein Trägheitsmesssystem (inertial measurement unit, IMU) in Verbindung mit z.B. einem elektronischen Kompasssystem ermittelt werden.

Ausgehend von einem aktuellen Positionsmesswert $p_j$ kann anhand des aktuellen Bewegungsvektors $v_j$ ein Erwartungswert $e_{j+1}$ für den jeweils nächsten Positionsmesswert $p_{j+1}$ der Folge F bzw. $\{p_i\}$ geschätzt (extrapoliert) werden, und die Abweichung $\delta_{j+1}$ des nächsten Positionsmesswerte $p_{j+1}$ von seinem Erwartungswert $e_{j+1}$ stellt - unter der Annahme, dass z.B. ein Dopplerbestimmter Bewegungsvektor $v_j$ sehr hohe Genauigkeit hat - wieder ein Streubereichsmaß dar, das als Grundlage für die Berechnung des Positionsqualitätsmaßes $q_{j+1}$ des Positionsmesswerts $p_{j+1}$ in Block 13 dienen kann, z.B. in der Form $q_{j+1} \mathrel{\hat{=}} 1/\delta_{j+1}$.

Alternativ (oder zusätzlich) zu dem Bewegungsvektor $v_j$ könnte die OBU 3 auch Bewegungswerte $m_j$ von einem Fahrzeugsensor des Fahrzeugs 2, z.B. einem Geschwindigkeits- oder Trägheitssensor, Tachometer, Odometer, Fahrtenschreiber od. dgl., empfangen, siehe Pfad 15 in Fig. 5, welche ebenso zur Bestimmung eines Erwartungswerts $e_{j+1}$ für den nächsten Positionsmesswert $p_{j+1}$ und damit der Abweichung $\delta_{j+1}$ und des Positionsqualitätsmaßes $q_{j+1}$ verwendet werden können.

Anhand der Straßensegmente $s_3$ und $s_4$ von

Fig. 6 und des Blocks 16 von Fig. 5 ist eine weitere Variante der Erstellung des Positionsqualitätsmaßes $q_i$ gezeigt, u.zw. durch Inter- bzw. Extrapolation von Erwartungswerten $e_k$, $e_{l+1}$ aus der Folge F von Positionsmesswerten $p_i$. Im Straßensegment $s_3$ wird beispielhaft ein Erwartungswert $e_k$ durch Interpolation zwischen zwei dem Positionsmesswert $p_k$ benachbarten Positionsmesswerten $p_{k-1}$ und $p_{k+1}$ gebildet und die Abweichung $\delta_k$ des Positionsmesswerts $p_k$ dazu ermittelt. Im Straßensegment $s_4$ wird ein Erwartungswert $e_{l+1}$ für einen nächsten Positionsmesswert $p_{l+1}$ durch Extrapolation aus vorhergehenden Positionsmesswerten ..., $p_{l-2}$, $p_{l-1}$, $p_1$ gebildet und wieder die Abweichung $\delta_{l+1}$ des Positionsmesswerts $p_{l+1}$ dazu bestimmt.

Die Inter- bzw. Extrapolation kann jeweils auch anhand von zwei oder mehreren voraus- bzw. nachgehenden Positionsmesswerten $p_i$ der Folge F durchgeführt werden, und sowohl lineare Inter- und Extrapolationen als auch solche höherer Ordnung ("wavelet-fitting", "spline fitting") können in Betracht gezogen und in einem entsprechenden Inter- bzw. Extrapolierer 16 von Fig. 5 ausgeführt werden.

Aus den Abweichungen $\delta_k$, $\delta_l$ können dann wieder im Block 13 die entsprechenden Positionsqualitätsmaße $q_i$ (hier: $q_k$, $q_l$) ermittelt werden, z.B. in der Form $q_k \mathrel{\hat{=}} 1/\delta_k$ und $q_l \mathrel{\hat{=}} 1/\delta_l$.

Im Straßensegment $s_5$ von Fig. 6 und Block 17 von Fig. 5 ist eine Variante gezeigt, bei der für jeden Positionsmesswert $p_m$ durch map-matching-Vergleich mit der digitalen Straßenkarte 1' der Abstand bzw. die Abweichung $\delta_m$ vom nächstliegenden Straßensegment $s_k$, hier $s_5$, bestimmt wird. Bei Verwendung einer "thick-client"-OBU kann das map-matching von Block 17 in der OBU 3 ablaufen; im Falle einer "thin-client"-OBU kann dieser Schritt in einen externen map-matching-proxy oder die Mautzentrale 11 ausgelagert werden. Aus der Abweichung $\delta_m$ kann dann wieder im Block 13 das Positionsqualitätsmaß $q_m \mathrel{\hat{=}} 1/\delta_m$ für den Positionsmesswert $p_m$ bestimmt werden.

Es versteht sich, dass das Positionsqualitätsmaß $q_i$ im Block 13 auch aus einer beliebigen Funktion F, z.B. gewichteten Summe, der Streubereichswerte $b_i$ und Abweichungen $\delta_j$, $\delta_k$, $\delta_l$, $\delta_m$ berechnet werden kann, d.h. $q_i = f(b_i, \delta_j, \delta_k, \delta_l, \delta_m)$.

Die über die Pfade 12 und 15 - 17 erhaltenen Werte könnten in Block 13 gegebenenfalls auch mehrstufig ausgewertet werden, um das Qualitätsmaß $q_i$ zu erzeugen, z.B. zunächst mithilfe der Streubereichswerte $b_i$ und, wenn diese ausreichend klein sind, anschließend anhand der Erwartungswerte $e_i$, $e_j$, $e_k$, $e_l$. Auch könnten die Positionsqualitätsmaße $q_i$ für verschiedene Positionsmesswerte $p_i$ unterschiedlich erzeugt werden, z.B. wenn während der GNSS-Ortung DOP-Werte vorliegen, die bei zwischenzeitlicher Mobilfunk-Ortung nicht erstellt werden, oder die Positionsqualitätsmaße $q_i$ werden anhand herstellerspezifischer Qualitätsindikatoren gebildet, die handelsübliche GNSS-Empfänger erzeugen können.

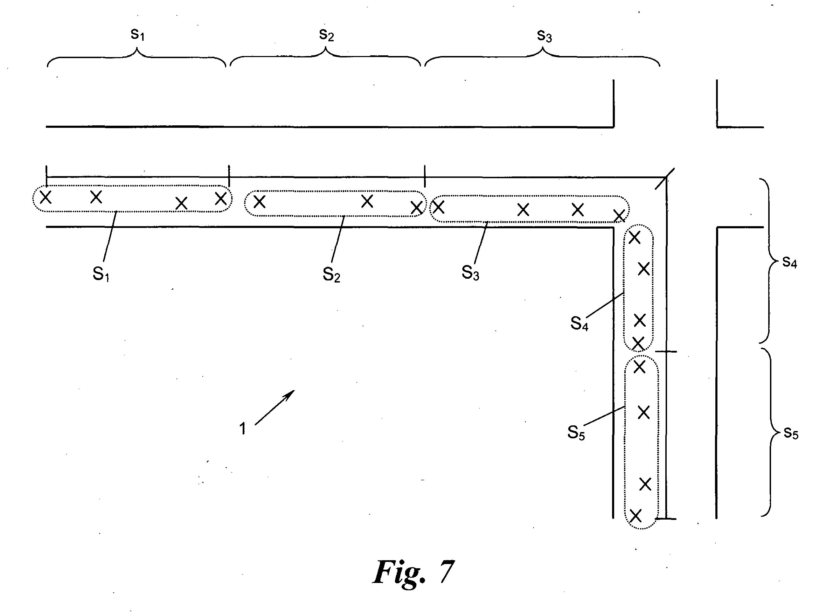

Zurückkommend auf Fig. 4 werden nun in einem ersten Schritt 18 des Verfahrens aus den von der OBU 3 erzeugten Folgen $\{p_i\}$ und $\{q_i\}$ von Positionsmesswerten und zugehörigen Positionsqualitätsmaßen aufeinanderfolgende Segmente bzw. Sätze $S_1$, $S_2$, ..., allgemein $S_n$, von Positionsmesswerten entnommen, u.zw. so, dass Positionsmesswerte $p_i$, deren Positionsqualitätsmaße $q_i$ einen vorgegebenen ersten Schwellwert $\sigma_1$ nicht erreichen bzw. unterschreiten, in die Sätze $S_n$ nicht mitaufgenommen, d.h. nicht berücksichtigt werden. Fig. 7 zeigt das Ergebnis des Schritts 18 für die beispielhaften Positionsmesswerte von Fig. 6.

Wie in Fig. 7 gezeigt, wurde im Satz $S_1$ jener Positionsmesswert $p_i$ aus dem Straßensegment $s_1$ von Fig. 6 nicht berücksichtigt, dessen großer Streubereich $b_i$ zu einem Positionsqualitätsmaß $q_i$ geführt hatte, das kleiner als der Schwellwert $\sigma_1$ war. Ebenso wurden in den Sätzen $S_2$, $S_3$ und $S_4$ die beispielhaften Positionsmesswerte $p_{j+1}$, $p_k$, $p_{l+1}$ von Fig. 6 nicht berücksichtigt, da ihre Abweichungen $\delta_{j+1}$, $\delta_k$, $\delta_{l+1}$ von den jeweiligen Erwartungswerten $e_{j+1}$, $e_k$, $e_{l+1}$ groß und deshalb ihre Positionsqualitätsmaße $q_{j+1}$, $q_k$, $q_{l+1}$ kleiner als der Schwellwert $\sigma_1$ waren. Und in den Satz $S_5$ wurde der beispielhafte Positionsmesswert $p_m$ - neben anderen - aus dem Straßensegment $s_5$ von Fig. 6 nicht mitübernommen, dessen großer Abstand $\delta_m$ vom Straßensegment $s_5$ zu einem den Schwellwert $\sigma_1$ nicht erreichenden Positionsqualitätsmaß $q_m$ geführt hatte.

Die Entnahme der Sätze $S_n$ - und der jeweils zugehörigen Sätze $\{q_i\}_n$ von Positionsqualitätsmaßen $q_i$ - aus den Folgen $\{p_i\}$ und $\{q_i\}$ kann insbesondere so erfolgen, dass benachbarte Sätze $S_n$ überlappungsfrei aufeinanderfolgen, auch wenn dies nicht zwingend ist. Auch ist es nicht obligat, dass die Sätze $S_n$ annähernd den Straßensegmenten $s_k$ folgen, dies ist in den Fig. 6 und 7 lediglich zur besseren Übersicht so dargestellt. Tatsächlich kann die Entnahme ("Segmentierung und Extraktion") der Sätze $S_n$ in Schritt 18 völlig losgelöst von der Segmentierung des Straßennetzes 1 in der digitalen Straßenkarte 1' erfolgen, auch wenn eine ungefähre Anlehnung an die Straßensegmente $s_k$ nicht nur für das im Straßensegment $s_5$ gezeigte map-matching zur Bestimmung des Abstands $\delta_m$ sondern auch für die weiteren Schritte des Verfahrens zur Bestimmung des vom Fahrzeug 2 zurückgelegten Wegs günstig ist.

Die in Schritt 18 entnommenen Sätze $S_n$ von den Schwellwert $\sigma_1$ überschreitenden Positionsmesswerten $p_i$ werden anschließend - gemeinsam mit den den Sätzen $S_n$ zugeordneten Positionsqualitätsmaßen $\{q_i\}_n$ - einem Verfahrensschritt 19 zugeführt, in welchem für jeden Satz $S_n$ ein Satzqualitätsmaß $Q_n$ ermittelt wird, u.zw. in der folgenden Art und Weise.

In einer Ausführungsform wird das Satzqualitätsmaß $Q_n$ aus den jeweiligen Positionsqualitätsmaßen $q_i$ der im Satz $S_n$ enthaltenen Positionsmesswerte $p_i$ ermittelt, z.B. als Durchschnitt oder gewichtete Summe derselben, wofür alle in Mathematik bzw. Statistik bekannten Verfahren zur Verknüpfung von Messwerten geeignet sind.

In einer vereinfachten Ausführungsform wird das Satzqualitätsmaß $Q_n$ lediglich aus der Anzahl A von in den Satz $S_n$ aufgenommenen Positionsmesswerten $p_i$ gebildet, z.B. der absoluten Anzahl von Positionsmesswerten $p_i$ im Satz $S_n$ oder einer "relativen" Anzahl bezogen auf die ursprünglichen Positionsmesswerte $p_i$ der Folge F, d.h. als Verhältnis der Anzahlen von im Satz $S_n$ berücksichtigten Positionsmesswerten $p_i$ zur Summe aus im Satz $S_n$ berücksichtigten und nicht-berücksichtigten Positionsmesswerten $p_i$. Dabei kann auch eine Mindestanzahl von Positionsmesswerten $p_i$ im Satz $S_n$ vorgegeben werden, unterhalb der das Satzqualitätsmaß $Q_n$ auf Null gesetzt wird.

Die Sätze $S_n$ und ihre Satzqualitätsmaße $Q_n$ werden anschließend einem Vergleichsschritt 20 zugeführt, in welchem das Satzqualitätsmaß $Q_n$ jedes Satzes $S_n$ mit einem vorgegebenen zweiten Schwellwert $\sigma_2$ verglichen wird. Übersteigt das Satzqualitätsmaß $Q_n$ den zweiten Schwellwert $\sigma_2$, ist also die Quantität oder Gesamt-Qualität der Positionsmesswerte $p_i$ des Satzes $S_n$ ausreichend gut, wird zu einem Berechnungsschritt 21 verzweigt (Zweig "y"), in welchem der vom Fahrzeug 2 zurückgelegte Weg direkt aus den gegenseitigen Abständen $a_i$ der aufeinanderfolgenden Positionsmesswerte $p_i$ des Satzes $S_n$ ermittelt wird ("direct calculation", DC).

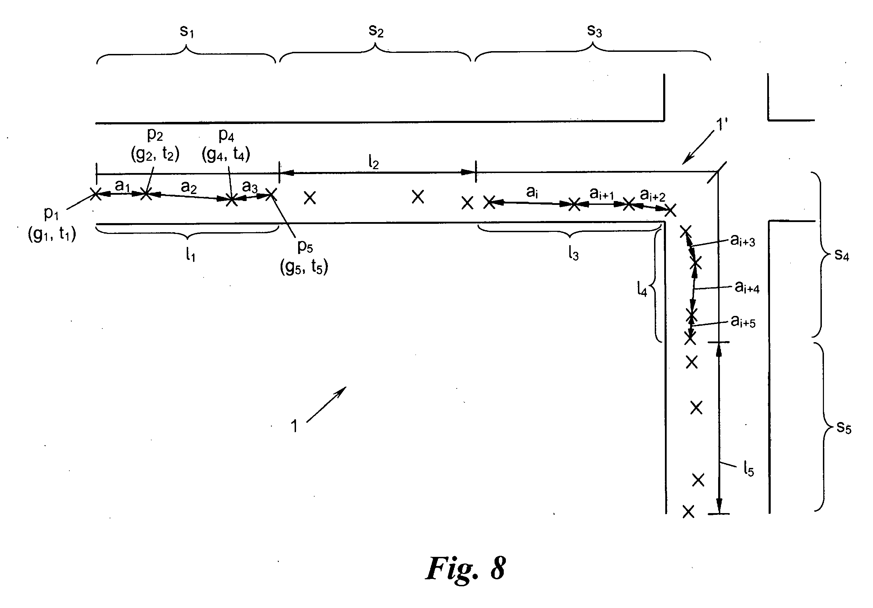

Dies ist in Fig. 8 beispielhaft für die Straßensegmente $s_1$, $s_3$ und $s_4$ und die Sätze $S_1$, $S_3$ und $S_4$ gezeigt, deren Satzqualitätsmaße $Q_1$, $Q_3$ und $Q_4$ den Schwellwert $\sigma_2$ überschritten: Die Länge $l_1$ des im Straßensegment $s_1$ und Satz $S_1$ zurückgelegten Wegs ergibt sich hier aus der Summe der gegenseitigen Abstände $a_1$, $a_2$ und $a_3$ der aufeinanderfolgenden Positionsmesswerte $p_1$, $p_2$, $p_4$ und $p_5$ des Satzes $S_1$, d.h. unter Nichtberücksichtigung des in Schritt 18 bereits ausgeschlossenen Positionsmesswertes $p_3$ ($p_i$ in Fig. 6).

Die Abstände $a_1$, $a_2$ und $a_3$ können dabei aus den geometrischen Abständen der Positionsmesswerte $p_1$, $p_2$, $p_4$ und $p_5$ selbst bestimmt werden, d.h. $a_i \stackrel{\wedge}{=} (p_{i+1} - p_i)$. Hat die Onboard-Unit 3 z.B. mithilfe des Satellitennavigationsempfängers 6 für jeden Positionsmesswert $p_i$ auch ein zugehöriges Paar $(g_i, t_i)$ von Geschwindigkeit $g_i$ und Messzeitpunkt $t_i$ erzeugt, so können die Abstände $a_1$, $a_2$ und $a_3$ alternativ auch aus den Geschwindigkeiten $g_1$, $g_2$ und $g_4$ und den jeweiligen Differenzen der Messzeitpunkte $t_1$, $t_2$, $t_4$ und $t_5$ der Positionsmesswerte $p_1$, $p_2$, $p_4$ und $p_5$ ermittelt werden, d.h. in der Form $a_i \stackrel{\wedge}{=} g_i \cdot (t_{i+1} - t_i)$.

Das Satzqualitätsmaß $Q_1$ des Satzes $S_1$ wurde im vorliegenden Beispiel als Durchschnitt der Positionsqualitätsmaße $q_i$ der im Satz $S_1$ enthaltenen Positionsmesswerte $p_i$ gebildet. In gleicher Weise werden die Längen $l_3$ und $l_4$ für die Sätze $S_3$ und $S_4$ ermittelt.

Erreicht im Vergleichsschritt 20 das Satzqualitätsmaß $Q_n$ den zweiten Schwellwert $\sigma_2$ hingegen nicht, wird zu dem alternativen Berechnungsschritt 22 verzweigt (Zweig "n"), in dem der vom Fahrzeug 2 zurückgelegte Weg mittels map-matching ("MM") ermittelt wird. Dies ist wiederum in Fig. 8 beispielhaft für die Straßensegmente $s_2$ und $s_5$ und die Sätze $S_2$ und $S_5$ gezeigt, deren Satzqualitätsmaße $Q_2$ und $Q_5$ den Schwellwert $\sigma_2$ nicht erreichten. Im Falle des Satzes $S_2$ unterschritt z.B. die Anzahl A der im Satz $S_2$ enthaltenen Positionsmesswerte $p_i$ eine Mindestanzahl (hier: vier), im Falle des Satzes $S_5$ war die relative Anzahl A = 4/7 (vier berücksichtigte von insgesamt sieben Positionsmesswerten $p_i$) unterhalb des zweiten Schwellwerts $\sigma_2$.

Im Berechnungsschritt 22 wird die Länge $l_2$ bzw. $l_4$ des vom Fahrzeug 2 im Straßensegment $s_2$ bzw. $s_5$ und Satz $S_2$ bzw. $S_5$ zurückgelegten Wegs durch Kartenabgleich (map-matching) aus den in der digitalen Straßenkarte 1' hinterlegten Segmentlängen $l_2$ und $l_5$ der Straßensegmente $s_2$ und $s_5$ ermittelt. Dazu werden - wie bereits anhand von Fig. 3 erläutert - die Positionsmesswerte $p_i$ des Satzes $S_n$ dem oder den jeweils nächstliegenden Straßensegment(en) $s_k$ zugeordnet und deren Segmentlänge(n) $l_k$ aus der Straßenkarte 1' herausgesucht. Der map-matching-Schritt 22 kann wieder in Abhängigkeit von der Bauart der OBU 3 entweder in der OBU 3 (bei thick-client-OBUs) oder extern (bei thin-client-OBUs) ausgeführt werden.

Wenn das Verfahren von Fig. 4 wiederholt für aufeinanderfolgende Sätze $S_n$ ausgeführt wird, können die jeweils ermittelten Weglängen $l_1, l_2, l_3, \ldots l_n$ zu einer gesamten vom Fahrzeug 2 zurückgelegten Weglänge

$$l = \sum_n l_n$$

summiert werden. Die solcherart aufsummierte zurückgelegte Weglänge 1 hat eine höhere Genauigkeit als eine ausschließlich durch direct calculation (DC) 21 oder map-matching (MM) 22 berechnete Weglänge.

Es versteht sich, dass in der Praxis die Positionsmesswerte $p_i$ wesentlich häufiger und somit als dichtere Folge F erzeugt werden als es in den Fig. 1 und 6 bis 8 zwecks Übersichtlichkeit stark vereinfacht dargestellt wurde. Auch können die Straßensegmente $s_k$ von Mautsegmenten bestehender Straßenmautsysteme verschieden sein und insbesondere geringe Segmentlängen $l_k$ aufweisen. Zweckmäßigerweise werden die Sätze $S_n$ auf die Straßensegmente $s_k$ so abgestimmt, dass im Bereich von Grenzen zwischen zwei Straßensegmenten $s_k$, $s_{k+1}$ auch zwei Sätze $S_n$, $S_{n+1}$ aneinandergrenzen; bei einer dichten Folge F von Positionsmesswerten $p_i$ sind etwaige Abweichungen an den Grenzen zwischen Straßensegmenten $s_k$, $s_{k+1}$ vernachlässigbar bzw. mitteln sich über größere Weglängen 1 aus.

Die Erfindung ist nicht auf die dargestellten Ausführungsformen beschränkt, sondern umfasst alle Varianten, Kombinationen und Modifikationen, die in den Rahmen der angeschlossenen Ansprüche fallen.

## Patentansprüche

1. Verfahren zum Ermitteln der Länge (1) eines von einem Fahrzeug (2) in einem Straßennetz (1), das in Form einer digitalen Straßenkarte (1') aus einem Netzgraphen von Straßensegmenten ($s_k$) jeweils bekannter Segmentlänge ($l_k$) modelliert ist, zurückgelegten Wegs unter Verwendung einer vom Fahrzeug (2) mitgeführten Onboard-Unit (3), welche eine Folge (F) von Messwerten ($p_i$) ihrer eigenen Position und für jeden Positionsmesswert ($p_i$) der Folge (F) ein zugehöriges Positionsqualitätsmaß ($q_i$) erzeugt, umfassend:

   Entnehmen eines Satzes ($S_n$) aufeinanderfolgender Positionsmesswerte ($p_i$) aus der Folge (F) unter Nichtberücksichtigung jener Positionsmesswerte ($p_i$), deren Positionsqualitätsmaß ($q_i$) einen vorgegebenen ersten Schwellwert ($\sigma_1$) unterschreitet, **gekennzeichnet durch** die Verfahrensschritte:

   Ermitteln eines Satzqualitätsmaßes ($Q_n$) anhand der Anzahl (A) der Positionsmesswerte ($p_i$) des Satzes ($S_n$) oder anhand ihrer Positionsqualitätsmaße (qi), und
   wenn das Satzqualitätsmaß ($Q_n$) einen vorgegebenen zweiten Schwellwert ($\sigma_2$) überschreitet: Ermitteln der Weglänge (1) aus den gegenseitigen Abständen ($a_i$) aufeinanderfolgender Positionsmesswerte ($p_i$) des Satzes ($S_n$),

   andernfalls: Ermitteln der Weglänge (1) unter Verwendung der digitalen Straßenkarte (1') **durch** Zuordnen der Positionsmesswerte ($p_i$) des Satzes ($S_n$) zu zumindest einem Straßensegment ($s_k$) und Ermitteln der Weglänge (1) aus der Segmentlänge ($l_k$) dieses zumindest einen Straßensegments ($s_k$).

2. Verfahren nach Anspruch 1, **dadurch gekennzeichnet, dass** das Satzqualitätsmaß ($Q_n$) aus den Positionsqualitätsmaßen ($q_i$) des Satzes ($S_n$) als Durchschnitt derselben ermittelt wird.

3. Verfahren nach Anspruch 1, **dadurch gekennzeichnet, dass** das Satzqualitätsmaß ($Q_n$) als Verhältnis der Anzahlen (A) von im Satz ($S_n$) berücksichtigten Positionsmesswerten ($p_i$) zur Summe aus berücksichtigten plus nicht-berücksichtigten Positionsmesswerten ($p_i$) ermittelt wird.

4. Verfahren nach einem der Ansprüche 1 bis 3, **dadurch gekennzeichnet, dass** die Positionsmesswerte ($p_i$) mittels eines Mobilfunkempfängers (9) der Onboard-Unit (3) durch Ortung in einem terrestrischen Mobilfunknetz (10) erzeugt werden.

**5.** Verfahren nach einem der Ansprüche 1 bis 3, **dadurch gekennzeichnet, dass** die Positionsmesswerte ($p_i$) mittels eines Satellitennavigationsempfängers (6) der Onboard-Unit (3) durch Ortung in einem Satellitennavigationssystem (8) erzeugt werden.

**6.** Verfahren nach Anspruch 5, **dadurch gekennzeichnet, dass** der Satellitennavigationsempfänger (6) zu jedem Positionsmesswert ($p_i$) einen zugehörigen DOP-Wert, bevorzugt HDOP-Wert, als Grundlage für dessen Positionsqualitätsmaß ($q_i$) ausgibt.

**7.** Verfahren nach einem der Ansprüche 1 bis 6, **dadurch gekennzeichnet, dass** das Positionsqualitätsmaß ($q_m$) eines Positionsmesswerts ($p_m$) in Abhängigkeit von dessen Abstand ($\delta_m$) zu einem nächstliegenden Straßensegment ($s_k$) der digitalen Straßenkarte (1') erzeugt wird.

**8.** Verfahren nach einem der Ansprüche 1 bis 7, **dadurch gekennzeichnet, dass** das Positionsqualitätsmaß ($q_k$) eines Positionsmesswerts ($p_k$) in Abhängigkeit von dessen Abstand ($\delta_k$) zu einem Erwartungswert ($e_k$) erzeugt wird, welcher für den genannten Positionsmesswert ($p_k$) durch Interpolation aus benachbarten Positionsmesswerten der Folge (F) gebildet wird.

**9.** Verfahren nach einem der Ansprüche 1 bis 7, **dadurch gekennzeichnet, dass** das Positionsqualitätsmaß ($q_j$, $q_l$) eines Positionsmesswerts ($p_j$, $p_l$) in Abhängigkeit von dessen Abstand ($\delta_j$, $\delta_l$) zu einem Erwartungswert ($e_j$, $e_l$) erzeugt wird, welcher für den genannten Positionsmesswert ($p_j$, $p_l$) durch Extrapolation aus vorhergehenden Positionsmesswerten der Folge (F) gebildet wird.

**10.** Verfahren nach Anspruch 9 in Verbindung mit Anspruch 5, **dadurch gekennzeichnet, dass** der Satellitennavigationsempfänger (9) zu jedem Positionsmesswert ($p_j$) einen zugehörigen Bewegungsvektor ($v_j$) ausgibt, welcher zur Extrapolation des Erwartungswerts ($e_j$) herangezogen wird.

**11.** Verfahren nach Anspruch 9, **dadurch gekennzeichnet, dass** die Onboard-Unit (3) zu jedem Positionsmesswert ($p_j$) einen Bewegungsmesswert ($m_j$) von einem Fahrzeugsensor empfängt, welcher zur Extrapolation des Erwartungswerts ($e_j$) herangezogen wird.

**12.** Verfahren nach einem der Ansprüche 1 bis 11, **dadurch gekennzeichnet, dass** aufeinanderfolgende Sätze ($S_n$) von Positionsmesswerten ($p_i$) überlappungsfrei aus der Folge (F) von Positionsmesswerten ($p_i$) entnommen werden.

**13.** Verfahren nach einem der Ansprüche 1 bis 12, **dadurch gekennzeichnet, dass** die gegenseitigen Abstände ($a_i$) aus den Positionsmesswerten ($p_i$) selbst ermittelt werden.

**14.** Verfahren nach einem der Ansprüche 1 bis 12, **dadurch gekennzeichnet, dass** die Onboard-Unit (3) für jeden Positionsmesswert ($p_i$) ein zugehöriges Paar ($g_i$, $t_i$) von Geschwindigkeit ($g_i$) und Messzeitpunkt ($t_i$) erzeugt, und dass die gegenseitigen Abstände ($a_i$) jeweils zweier aufeinanderfolgender Positionsmesswerte ($p_i$) aus der Geschwindigkeit ($g_i$) am ersten der beiden Positionsmesswerte ($p_i$) und der Differenz der Messzeitpunkte ($t_i$, $t_{i+1}$) der beiden Positionsmesswerte ($p_i$, $p_{i+1}$) ermittelt werden.

## Claims

**1.** A method for determining the length (I) of a path traveled by a vehicle (2) in a road network (1) which is modeled in the form of a digital road map (1') from a network graph of road segments ($s_k$) each having known segment lengths ($l_k$), using an onboard unit (3) carried by the vehicle (2), the unit generating a sequence (F) of readings ($p_i$) of the own position thereof and a related position quality index ($q_i$) for each position reading ($p_i$) of the sequence (F), comprising:

extracting a set ($S_n$) of consecutive position readings ($p_i$) from the sequence (F), disregarding those position readings ($p_i$), the position quality indices ($q_i$) of which fall below a predetermined first threshold value ($\sigma_1$); **characterized by** the steps:

determining a set quality index ($Q_n$) based on the number (A) of position readings ($p_i$) of the set ($S_n$) or based on the position quality indices ($q_i$) thereof; and
if the set quality index ($Q_n$) exceeds a predetermined second threshold value ($\sigma_2$): determining the path length (I) based on mutual distances ($a_i$) of consecutive position readings ($p_i$) of the set ($S_n$);

otherwise: determining the path length (I) using the digital road map (1') by associating the position readings ($p_i$) of the set ($S_n$) with at least one road segment ($s_k$), and determining the path length (I) based on the segment length ($l_k$) of this at least one road segment ($s_k$).

**2.** The method according to claim 1, **characterized in that** the set quality index ($Q_n$) is determined based on the position quality indices ($q_i$) of the set ($S_n$) as an average thereof.

**3.** The method according to claim 1, **characterized in that** the set quality index ($Q_n$) is determined as a ratio of the number (A) of position readings ($p_i$) that are regarded in the set ($S_n$) to the number of regarded and disregarded position readings ($p_i$).

**4.** The method according to any one of claims 1 to 3, **characterized in that** the position readings ($p_i$) are generated by way of a mobile communication receiver (9) of the onboard unit (3) by localization in a public land mobile network (10).

**5.** The method according to any one of claims 1 to 3, **characterized in that** the position readings ($p_i$) are generated by way of a satellite navigation receiver (6) of the onboard unit (3) by localization in a satellite navigation system (8).

**6.** The method according to claim 5, **characterized in that** the satellite navigation receiver (6) issues a related DOP value, preferably HDOP value, for each position reading ($p_i$) as a basis for the position quality index ($q_i$) thereof.

**7.** The method according to any one of claims 1 to 6, **characterized in that** the position quality measure ($q_m$) of a position reading ($p_m$) is generated depending on the distance ($\delta_m$) thereof from the nearest road segment ($s_k$) of the digital road map (1').

**8.** The method according to any one of claims 1 to 7, **characterized in that** the position quality index ($q_k$) of a position reading ($p_k$) is generated depending on the distance ($\delta_k$) thereof from an expected value ($e_k$), which is formed for this position reading ($p_k$) by way of interpolation based on neighboring position readings of the sequence (F).

**9.** The method according to any one of claims 1 to 7, **characterized in that** the position quality index ($q_j$, $q_l$) of a position reading ($p_j$, $p_l$) is generated depending on the distance ($\delta_j$, $\delta_l$) thereof from an expected value ($e_j$, $e_l$), which is formed for this position reading ($p_j$, $p_l$) by way of extrapolation based on preceding position readings of the sequence (F).

**10.** The method according to claim 9 in conjunction with claim 5, **characterized in that** the satellite navigation receiver (9) issues a related movement vector ($v_j$) for each position reading ($p_j$), the vector being used to extrapolate the expected value ($e_j$).

**11.** The method according to claim 9, **characterized in that** the onboard unit (3) receives a movement reading ($m_j$) from a vehicle sensor for every position reading ($p_j$), the movement reading being used to extrapolate the expected value ($e_j$).

**12.** The method according to any one of claims 1 to 11, **characterized in that** consecutive sets ($S_n$) of position readings ($p_i$) are extracted without overlap from the sequence (F) of position readings ($p_i$).

**13.** The method according to any one of claims 1 to 12, **characterized in that** the mutual distances ($a_i$) are determined directly based on the position readings ($p_i$).

**14.** The method according to any one of claims 1 to 12, **characterized in that** the onboard unit (3) generates a related pair ($g_i$, $t_i$) comprising a speed ($g_i$) and measuring time ($t_i$) for every position reading ($p_i$), and the mutual distances ($a_i$) of two respective consecutive position readings ($p_i$) are determined based on the speed ($g_i$) at the first of the two position readings ($p_i$) and the difference of the measuring times ($t_i$, $t_{i+1}$) of the two position readings ($p_i$, $p_{i+1}$).

**Revendications**

**1.** Procédé pour la détermination de la longueur (1) d'un trajet parcouru par un véhicule (2) sur un réseau routier (1), lequel est modélisé sous la forme d'une carte routière numérique (1') à partir d'un graphique de réseau de segments de route ($s_k$) présentant des longueurs de segment connues ($l_k$), à l'aide d'une unité de bord embarquée (3) par le véhicule (2), produisant une suite (F) de valeurs de mesure ($p_i$) de sa propre position et une mesure de qualité de position ($q_i$) correspondante pour chaque mesure de position ($p_i$) de la suite (F), comprenant :

l'extraction d'une série ($S_n$) de mesures de position ($p_i$) consécutives à partir de la suite (F), sans tenir compte des mesure de position ($p_i$) dont la mesure de qualité de position ($q_i$) est inférieure à une première valeur seuil prédéfinie ($\sigma_1$), **caractérisé par** les étapes de procédé suivantes :

détermination d'une mesure de qualité de série ($Q_n$) à l'aide du nombre (A) de mesures de position ($p_i$) de la série ($S_n$) ou à l'aide de ses mesures de qualité de position (qi), et

lorsque la mesure de qualité de série ($Q_n$) est supérieure à une deuxième valeur seuil prédéfinie ($\sigma_2$) : détermination de la longueur de trajet (1) à partir des écarts réciproques ($a_i$) entre les mesures de position ($p_i$) consécutives de la série ($S_n$),

autrement : détermination de la longueur de trajet (1) à l'aide de la carte routière numérique (1'), en attribuant les mesures de position ($p_i$) de la

série ($S_n$) à au moins un segment de route ($s_k$), et détermination de la longueur de trajet (1) à partir de la longueur de segment ($l_k$) de cet au moins un segment de route ($s_k$).

2. Procédé selon la revendication 1, **caractérisé en ce que** la mesure de qualité de série ($Q_n$) est déterminée à partir des mesures de qualité de position ($q_i$) de la série ($S_n$) en tant que moyenne de celles-ci.

3. Procédé selon la revendication 1, **caractérisé en ce que** la mesure de qualité de série ($Q_n$) est déterminée en tant que rapport entre les nombres (A) de mesures de position ($p_i$) prises en compte dans la série ($S_n$) et la somme des mesures de position ($p_i$) prises en compte en non prises en compte.

4. Procédé selon l'une des revendications 1 à 3, **caractérisé en ce que** les mesures de position ($p_i$) sont produites au moyen d'un récepteur radio mobile (9) de l'unité de bord (3), par localisation dans un réseau cellulaire mobile terrestre (10).

5. Procédé selon l'une des revendications 1 à 3, **caractérisé en ce que** les mesures de position ($p_i$) sont produites au moyen d'un récepteur de navigation par satellite (6) de l'unité de bord (3), par localisation dans un système de navigation par satellite (8).

6. Procédé selon la revendication 5, **caractérisé en ce que** le récepteur de navigation par satellite (6) émet une valeur DOP correspondante pour chaque mesure de position ($p_i$), de préférence une valeur HDOP, en tant que base pour la mesure de qualité de position ($q_i$) de celle-ci.

7. Procédé selon l'une des revendications 1 à 6, **caractérisé en ce que** la mesure de qualité de position ($q_m$) d'une valeur de mesure de position ($p_m$) est produite en fonction de l'écart de celle-ci ($\delta_m$) par rapport à un segment de route ($s_k$) le plus proche de la carte routière numérique (1').

8. Procédé selon l'une des revendications 1 à 7, **caractérisé en ce que** la mesure de qualité de position ($q_k$) d'une valeur de mesure de position ($p_k$) est produite en fonction de l'écart ($\delta_k$) de celle-ci par rapport à une valeur attendue ($e_k$) formée pour ladite valeur de mesure de position ($p_k$) par interpolation à partir de valeurs de mesure voisines de la suite (F).

9. Procédé selon l'une des revendications 1 à 7, **caractérisé en ce que** la mesure de qualité de position ($q_j$, $q_i$) d'une valeur de mesure de position ($p_j$, $p_l$) est produite en fonction de l'écart ($\delta_j$, $\delta_1$) de celle-ci par rapport à une valeur attendue ($e_j$, $e_l$) formée pour ladite valeur de mesure de position ($p_j$, $p_l$) par extra-polation à partir de valeurs de mesure de position précédentes de la suite (F).

10. Procédé selon la revendication 9 en association avec la revendication 5, **caractérisé en ce que** le récepteur de navigation par satellite (9) émet un vecteur de déplacement ($v_j$) correspondant pour chaque valeur de mesure de position ($p_j$), lequel est utilisé pour l'extrapolation de la valeur attendue ($e_j$).

11. Procédé selon la revendication 9, **caractérisé en ce que** l'unité de bord (3) reçoit une valeur de déplacement ($m_j$) d'un capteur de véhicule pour chaque valeur de mesure de position ($p_j$), laquelle est utilisée pour l'extrapolation de la valeur attendue ($e_j$).

12. Procédé selon l'une des revendications 1 à 11, **caractérisé en ce que** les séries ($S_n$) consécutives de valeurs de mesure de position ($p_i$) sont extraites sans chevauchement à partir de la suite (F) de valeurs de mesure de position ($p_i$).

13. Procédé selon l'une des revendications 1 à 12, **caractérisé en ce que** les écarts réciproques ($a_i$) sont déterminés à partir des valeurs de mesure de position ($p_i$) elles-mêmes.

14. Procédé selon l'une des revendications 1 à 12, **caractérisé en ce que** l'unité de bord (3) produit une paire correspondante ($g_i$, $t_i$) de vitesse ($g_i$) et d'instant de mesure ($t_i$) pour chaque valeur de mesure de position ($p_i$), et **en ce que** les écarts réciproques ($a_i$) entre deux valeurs de mesure de position ($p_i$) consécutives sont respectivement déterminés à partir de la vitesse ($g_i$) à la première des deux valeurs de mesure de position ($p_i$) et de la différence entre les instants de mesure ($t_i$, $t_{i+1}$) des deux valeurs de mesure de position ($p_i$, $p_{i+1}$).

**Fig. 1**

**Fig. 2**

1

$s_3$

$l_3$

$l_b$

$w_b$

$l_a$

$w_a$

$l_4$

$s_4$

## *Fig. 3*

6, 9

F

RF

$\{p_i\}$

$\{p_i\}$

7, 10

$\{b_i\}$

16

17

$\{v_j\}$

I/E

MM

$m_j$

15

14

12

$\{\delta_k\}$
$\{\delta_l\}$

$\{\delta_m\}$

calc $q_i$

$\{q_i\}$

13

3

## *Fig. 5*

*Fig. 4*

*Fig. 6*

EP 2 698 607 B1

$S_1$  $S_2$  $S_3$

$S_1$  $S_2$  $S_3$

$S_4$

$S_4$

$S_5$

$S_5$

1

**Fig. 7**

*Fig. 8*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1736932 A
- US 20100106405 A